# EUROPEAN PATENT APPLICATION

(11) **EP 2 711 944 A1**
(43) Date of publication of application: **26.03.2014**
(21) Application number: 11865595.0
(22) Date of filing: 16.05.2011
(51) Int. Cl.: H01F 37/00, H01F 27/24

(54) **REACTOR DEVICE AND POWER CONVERTER EMPLOYING SAME**

(71) Applicant: Hitachi, Ltd., Tokyo 100-8280 (JP)
(72) Inventor: KURITA, Naoyuki, Tokyo 100-8280 (JP); IDE, Kazumasa, Tokyo 100-8280 (JP); KATOH, Shuji, Tokyo 100-8280 (JP)
(74) Representative: Beetz & Partner
(86) International application number: PCT/JP2011/061138
(87) International publication number: WO 2012/157053

(57) **Abstract**

A reactor apparatus 10 includes two yoke iron cores 11a, 11b disposed opposite each other, a plurality of magnetic leg iron cores 31 each of which has a coil 21 wound therearound and provided with a gap adjusting means 5a, 5b, and one or more zero-phase magnetic leg iron cores 41 around which a coil is not wound, wherein the two yoke iron cores 11a, 11b disposed opposite each other are connected to each other with the plurality of magnetic leg iron cores 31 and the one or more zero-phase magnetic leg iron cores 41. In addition, the reactor apparatus is used for a power converter.

## Description

### TECHNICAL FIELD

The present invention relates to a reactor apparatus included in an electric power system and a power converter using the same.

### DESCRIPTION OF RELATED ART

For an iron core of a three-phase reactor apparatus, a transformer, or the like, having a large capacity, included in an electric power system, a laminated iron core is used in general which is formed by stacking a plurality of thin plates of magnetic material such as silicon steel and amorphous metal in order to reduce a loss (iron loss) during operation. Then, three sets of coils are respectively wound around three magnetic legs composed of laminated iron cores and formed on a flat surface.

In addition, for flowing magnetic flux caused by zero-phase-sequence impedance that is generated when a voltage value of each phase and/or a mutual phase-difference in a three-phase AC power supply deviate from an ideal state, a three-phase five-leg type iron core is commonly used in which two magnetic legs, having no coil wound around, for the zero phase are further added outside the three magnetic legs.

A configuration of this three-phase five-leg type transformer is disclosed in Patent Literature 1 for example. In Patent Literature 1, a technique is disclosed in which a three-phase five-leg iron core is formed by arranging four two-legged iron cores, each being a laminated iron core formed by stacking a plurality of thin steel plates, and three magnetic legs that are main legs thereof are wound with respective phase coils.

### PRIOR ART LITERATURE

### Patent Literature

1: Japanese Patent Application Publication No. H05-234783 A

### SUMMARY OF THE INVENTION

### Problems to be solved by the Invention

A summary of the structure of a three-phase transformer using a three-phase five-leg type iron core disclosed in Patent Literature 1 is shown in Fig. 11. In the drawing, four two-legged annular iron cores 331 formed by laminating thin magnetic material are arranged side by side, and three magnetic leg sections 331a, 331b, 331c formed by the respective pairs of adjacent iron cores are wound with coils 330a, 330b, 330c , respectively, to constitute a three-phase coil. Also, the magnetic leg sections 331d, 331e, having no coils wound, of the two-legged iron cores at both ends are used as magnetic legs for zero-phase-sequence impedance. Note that, in Patent Literature 1, the present configuration is disclosed as a transformer, however when each coil is formed of a primary winding only without a secondary winding, this transformer having entirely identical iron core shape functions as a reactor apparatus.

However, as the three-phase five-leg type iron core of a conventional configuration described above is configured such that three-phase coils are arranged side by side on a flat surface, the width of a transformer or a reactor apparatus becomes large, causing a housing problem. Also, because the mutual distances between three coils are different from one another, there is a problem that symmetry of electric properties of each phase is easily deviated, causing difficulty in obtaining stability of operation and low loss property.

Therefore, the present invention solves such problems and it is intended to provide a reactor apparatus having excellent housing attributes and electric properties, and a power converter using the same.

### Solution to Problems

In order to solve the problems described above, a reactor apparatus of the present invention is configured as described below. That is, the reactor apparatus is characterized to include two yoke iron cores disposed opposite each other, a plurality of magnetic leg iron cores each of which has a coil wound therearound and provided with a gap adjusting means, and one or more zero-phase magnetic leg iron cores around which a coil is not wound, wherein the two yoke iron cores disposed opposite each other are connected to each other with the plurality of magnetic leg iron cores and the one or more zero-phase magnetic leg iron cores.

In addition, the power converter of the present invention is characterized to use the reactor apparatus.

### Effects of the Invention

According to the present invention, a reactor apparatus having excellent housing attributes and electric properties and a power converter using the same can be provided.

### BRIEF DESCRIPTION OF DRAWINGS

Fig. 1 is a perspective view showing a structure of a reactor apparatus of the first embodiment of the present invention.
Fig. 2 is a top perspective view showing a structure of a reactor apparatus of the first embodiment of the present invention.
Fig. 3 is a vertical cross-sectional view showing a structure of a reactor apparatus of the first embodiment of the present invention.
Fig. 4 is a top perspective view showing a structure of a reactor apparatus of the second embodiment of the present invention.
Fig. 5 is a top perspective view showing a structure of a reactor apparatus of the third embodiment of the present invention.
Fig. 6 is a top perspective view showing a structure of a reactor apparatus of the fourth embodiment of the present invention.
Fig. 7 is a top perspective view showing a structure of a reactor apparatus of the fifth embodiment of the present invention.
Figs. 8A and 8B are diagrams showing exemplary shapes of a yoke iron core of the present invention, where Fig. 8A is a diagram showing the shape of a yoke iron core of the reactor apparatus of the sixth embodiment, and Fig. 8B is a diagram showing the shape of a yoke iron core of the reactor apparatus of the seventh embodiment.
Fig. 9 is a vertical cross-sectional view showing a fixing method for the reactor apparatus of the eighth embodiment of the present invention.
Fig. 10 shows a configuration of a power converter of the ninth embodiment of the present invention, and is a circuit diagram in which a reactor apparatus is applied to a power converter.

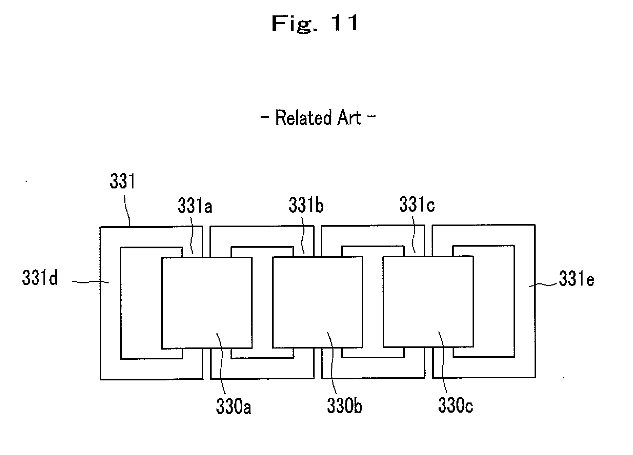

Fig. 11 is a schematic view of the structure of an example of a three-phase five-leg type transformer using a conventional reactor apparatus.

### DESCRIPTION OF EMBODIMENTS

Hereinafter, embodiments of the present invention will be described referring to the drawings.

### First Embodiment

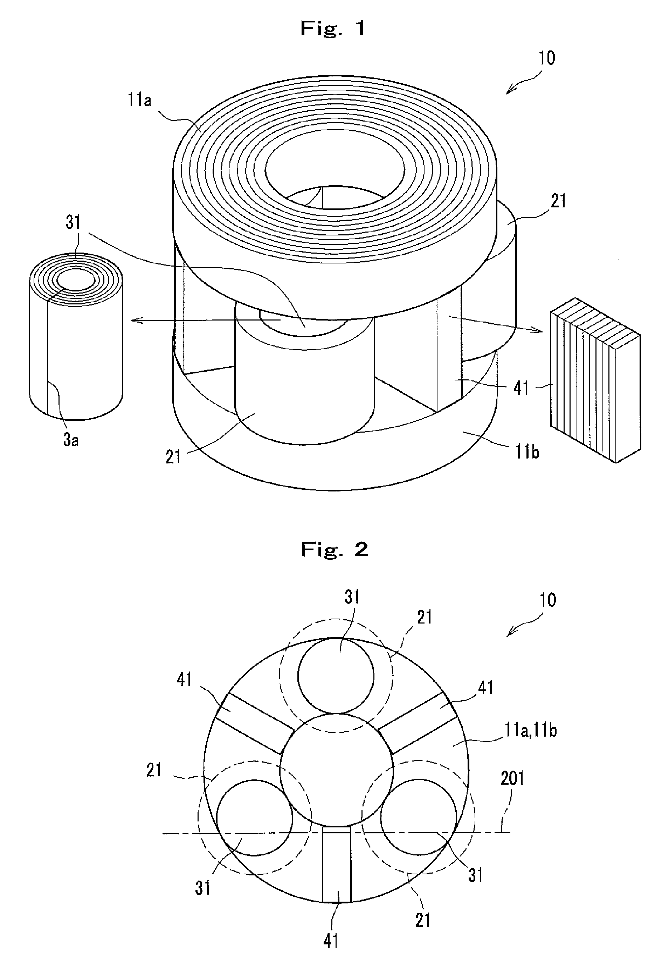

A first embodiment of the present embodiment will be described referring to Figs. 1 to 3.

Fig. 1 is a perspective view showing a structure of a reactor apparatus 10 of the first embodiment. Note that a magnetic leg iron core 31 and a zero-phase magnetic leg iron core 41 are taken out and illustrated at the left side and at the right side, respectively.

Fig. 2 is a diagram when the reactor apparatus 10 of the first embodiment is viewed from the top. However, it is a top perspective view as viewed through a yoke iron core 11a positioned at the top surface, and an outermost circular shell of a coil 21 is shown in the broken line for the convenience of illustration.

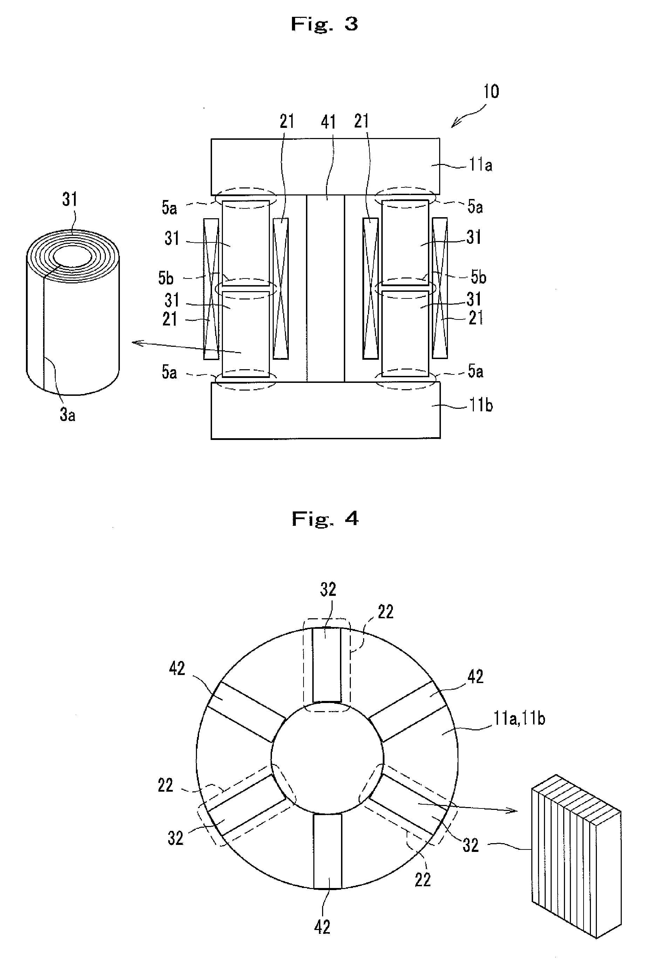

Fig. 3 is a vertical cross-sectional view showing a structure of the reactor apparatus 10 of the first embodiment at the cross section shown in the single dot chain line 201 in Fig. 2. Note that a magnetic leg iron core 31 is taken out and illustrated at the left side.

As shown in Fig. 1, the yoke iron cores 11a and 11b formed by rolling thin belt-shaped magnetic material in a toroidal shape (annular shape) with insulation treatment have a circular thick shape having a hollow space. In addition, illustration of the yoke iron core 11a with plural concentric circles in Fig. 1 expresses that the yoke iron core 11a is formed by rolling the material in a toroidal shape.

The magnetic leg iron core 31 has a cylindrical shape formed by rolling thin belt-shaped magnetic material with insulation treatment. Illustration of the magnetic leg iron core 31 with plural concentric circles in Fig. 1, Fig. 3 expresses that the magnetic leg iron core 31 is formed by rolling the material in a cylindrical shape.

In addition, a slit (gap) 3a (Fig. 1, Fig. 3) is provided at least at one position in the longitudinal direction of the magnetic leg iron core 31.

Further, it is preferable from the viewpoint of improving the electric properties of the reactor apparatus 10 that the laminating direction of the thin belt-shaped magnetic material constituting the plurality of magnetic leg iron cores 31 is almost the same as the laminating direction of the thin belt-shaped magnetic material constituting the yoke iron cores 11a, 11b.

Furthermore, the yoke iron cores 11a, 11b and the magnetic leg iron cores 31 are formed of isotropic material having soft magnetic properties such as ferrite and a compressed powder conductor.

The yoke iron cores 11a and 11b are disposed so as to be opposite each other at the upper and lower ends of the reactor apparatus 10 (Fig. 1, Fig. 3).

Three magnetic leg iron cores 31 are provided between the yoke iron cores 11a and 11b, to magnetically connect the two yoke iron cores 11a and 11b to each other. However, as described below, there is a case a gap (opening, space) by a gap adjusting means 5a (Fig. 3) exists at a position where the yoke iron cores 11a, 11b and the magnetic leg iron cores 31 are connected to each other.

As shown in Fig. 2, the three magnetic leg iron cores 31 are disposed on the circumference of the yoke iron cores 11a, 11b in the mutual positional relation at an angle of approximately 120° relative to a concentric axis of the yoke iron cores 11a, 11b ,each in a circular shape and having a hollow space.

Note that the reason the three magnetic leg iron cores 31 are disposed in the positional relation described above is for the purpose of making the reactor apparatus 10 of the present embodiment function as a three-phase reactor for three-phase AC, securing electrical symmetry.

Further, in order to prevent the inductance value of the reactor apparatus 10 from changing and a loss at the reactor apparatus 10 from increasing due to magnetic saturation of the iron cores, each of the magnetic leg iron core 31 is provided, as shown in Fig. 3, with at least one or more gap adjusting means (5a, 5b). These gap adjusting means may be provided at the connecting section to the yoke iron cores 11a, 11b as the gap adjusting means 5a, and/or in the middle of the magnetic leg iron core 31 as the gap adjusting means 5b.

As shown in Fig. 1 to Fig. 3, the coils 21 are wound around the three magnetic leg iron cores 31, respectively. With this configuration, the basic structure of the reactor in which a coil is wound around an iron core having high magnetic permeability is embodied electrically.

Note that the coil 21 is formed of a linear conductor or a plate-like conductor provided with insulation material.

Further, as a magnetic flux is generated in the longitudinal direction of the magnetic leg iron core 31 when an electric current flows through the coil 21, in order to prevent the eddy current from flowing in the circumferential direction of the magnetic leg iron core 31 by the magnetic flux and the loss at the reactor apparatus 10 from increasing, as described above, the magnetic leg iron core 31 is provided with at least one slit 3a in the longitudinal direction to prevent the eddy current from being generated.

The zero-phase magnetic leg iron core 41 has a plurality of sheets of thin belt-shaped magnetic material laminated with insulation treatment to form a rectangular parallelepiped shape. Illustration of the zero-phase magnetic leg iron core 41 as a collection of plural rectangular parallelepipeds in Fig. 1 expresses that the zero-phase magnetic leg iron core 41 is formed by laminating the material.

The zero-phase magnetic leg iron cores 41 are, as shown in Fig. 2, disposed on the circumference rotated by approximately 60° respectively (by approximately 120° mutually between three zero-phase magnetic leg iron cores 41) from the position of the magnetic leg iron cores 31, relative to a concentric axis of the yoke iron cores 11a, 11b, each in a circular shape and having a hollow space, and connect the yoke iron cores 11a and 11b to each other, similarly to the magnetic leg iron cores 31.

The zero-phase magnetic leg iron cores 41 are provided as passages for flowing the magnetic flux by zero-phase impedance generated when the phases of the three-phase AC current flowing in the coils 21 wound around the three magnetic leg iron cores 31 deviate from an ideal state.

With the structure described above, the three-phase reactor apparatus 10 is configured in which each of the iron cores is formed using a component obtained by laminating plural sheets of thin belt-shaped magnetic material.

As shown in Fig. 2, the reactor apparatus 10 of the first embodiment is configured to include the three magnetic leg iron cores 31, the three coils 21 wound around the magnetic leg iron cores 31, and the three zero-phase magnetic leg iron cores 41. Then, because these magnetic leg iron cores 31, coils 21 and zero-phase magnetic leg iron cores 41 are disposed on the circumference of the yoke iron cores 11a, 11b at an angle of 120°, respectively, the reactor apparatus 10 has excellent symmetry as the three-phase AC, and excellent electric properties.

### Second Embodiment

Next, a second embodiment of the present invention will be described.

Fig. 4 is a top perspective view showing a structure of a reactor apparatus of the second embodiment. Note that a magnetic leg iron core 32 is taken out and illustrated at the right side.

In Fig. 4, each of the three magnetic leg iron cores 32 having coils 22 wound therearound, respectively, and three zero-phase magnetic leg iron cores 42 has plural sheets of thin belt-shaped magnetic material laminated with insulation treatment, to form a rectangular parallelepiped shape.

Further, although it is not illustrated, the three magnetic leg iron cores 32 are respectively provided with at least one or more gap adjusting means (corresponding to 5a, 5b in Fig. 3), and connect the two yoke iron cores 11a and 11b to each other along with the three zero-phase magnetic leg iron cores 42.

Note that the laminating direction of the thin belt-shaped magnetic material of the magnetic leg iron cores 32 and the zero-phase magnetic leg iron cores 42 is preferably made the same as the laminating direction of the yoke iron cores 11a, 11b, in particular in the radial direction.

In the above configuration shown in Fig. 4, the difference from Fig. 2 that shows the first embodiment is that the magnetic leg iron cores 32 and the coils 22 have a rectangular parallelepiped shape. By making the magnetic leg iron cores 32 and the coils 22 in a rectangular parallelepiped shape, it may cause an effect in reducing the size as a reactor apparatus, the number of steps in the manufacturing process, or the like.

In addition, as those other than the shape of the magnetic leg iron cores 32 and the coils 22 in the second embodiment are almost the same as Fig. 2 that shows the first embodiment, duplicated description will be omitted.

### Third Embodiment

Next, a third embodiment of the present invention will be described.

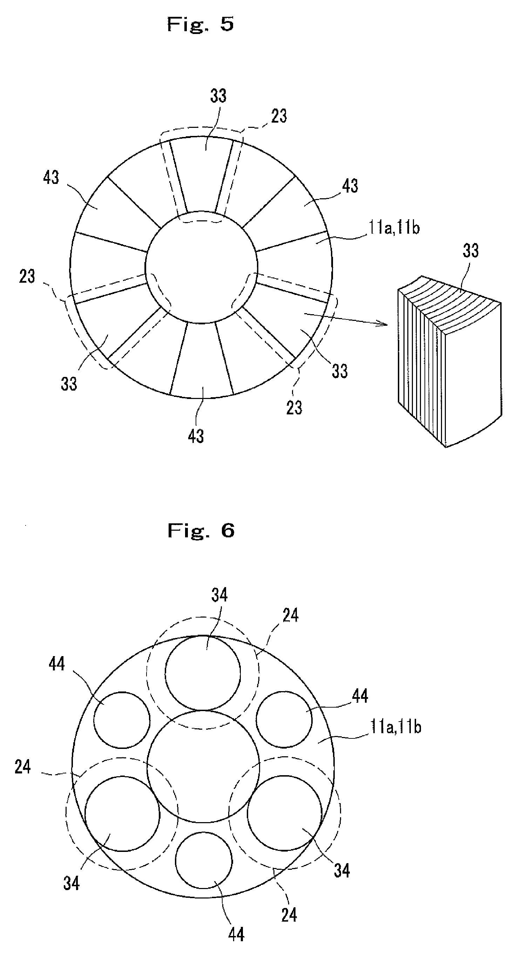

Fig. 5 is a top perspective view showing a structure of a reactor apparatus of the third embodiment. Note that a magnetic leg iron core 33 is taken out and illustrated at the right side.

In Fig. 5, each of the three magnetic leg iron cores 33 having coils 33 wound therearound, respectively, and three zero-phase magnetic leg iron cores 43 has plural sheets of thin belt-shaped magnetic material laminated with insulation treatment, to form a substantially sector shape.

These three magnetic leg iron cores 33 and three zero-phase magnetic leg iron cores 43, each having a substantially sector shape may be formed, for example, by cutting an iron core in the radial direction at a suitable angle, where the iron core is formed by rolling thin belt-shaped magnetic material in a toroidal shape with insulation treatment.

In addition, although it is not illustrated, the three magnetic leg iron cores 33 are respectively provided with at least one or more gap adjusting means (corresponding to 5a, 5b in Fig. 3), and connect the two yoke iron cores 11a and 11b to each other along with the three zero-phase magnetic leg iron cores 43. Note that the laminating direction of the thin belt-shaped magnetic material of the magnetic leg iron cores 33 and the zero-phase magnetic leg iron cores 43 is preferably made same as the laminating direction of the yoke iron cores 11a, 11b, in particular in the radial direction.

Further, as the coil 23 is wound around the magnetic leg iron core 33 having a substantially sector shape as described above, the coil 23 becomes to have a shape reflecting the shape of the magnetic leg iron core 33 (substantially sector shape).

In the above configuration shown in Fig. 5, the difference from Fig. 2 that shows the first embodiment is that the magnetic leg iron cores 33, the coils 23, and the zero-phase magnetic leg iron cores 43 have a substantially sector shape. By making the magnetic leg iron cores 33, the coils 23, and the zero-phase magnetic leg iron cores 43 in a substantially sector shape, it may cause an effect in reducing the size as a reactor apparatus.

In addition, as those other than the shape of the magnetic leg iron cores 33, the coils 23, and the zero-phase magnetic leg iron cores 43 in the third embodiment are almost the same as Fig. 2 that shows the first embodiment, duplicated description will be omitted.

### Fourth Embodiment

Next, a fourth embodiment of the present invention will be described.

Fig. 6 is a top perspective view showing the structure of a reactor apparatus of the fourth embodiment.

In Fig. 6, each of three magnetic leg iron cores 34 having coils 24 wound therearound, respectively, and three zero-phase magnetic leg iron cores 44 is configured to have plural sheets of thin belt-shaped magnetic material wound thereround for lamination, with insulation treatment, to form a cylindrical shape.

Similarly to the magnetic leg iron core 31 shown in the first embodiment, it is preferable to provide a slit (corresponding to 3a in Fig. 1) in each of the magnetic leg iron cores 34 in the longitudinal direction thereof. In addition, although it is not illustrated, the three magnetic leg iron cores 34 are respectively provided with one or more gap adjusting means (corresponding to 5a, 5b in Fig. 3), and connect the two yoke iron cores 11a and 11b to each other along with the three zero-phase magnetic leg iron cores 44.

In the above configuration shown in Fig. 6, the difference from Fig. 2 that shows the first embodiment is that the zero-phase magnetic leg iron core 43 has a cylindrical shape. By making the zero-phase magnetic leg iron core 44 in a cylindrical shape, it may improve symmetry attributes of the zero-phase magnetic leg iron cores 44 to cause an effect in improving the electric properties as a reactor apparatus.

In addition, as those other than the shape of the zero-phase magnetic leg iron cores 44 in the fourth embodiment are almost the same as Fig. 2 that shows the first embodiment, duplicated description will be omitted.

### Fifth Embodiment

Next, a fifth embodiment of the present invention will be described.

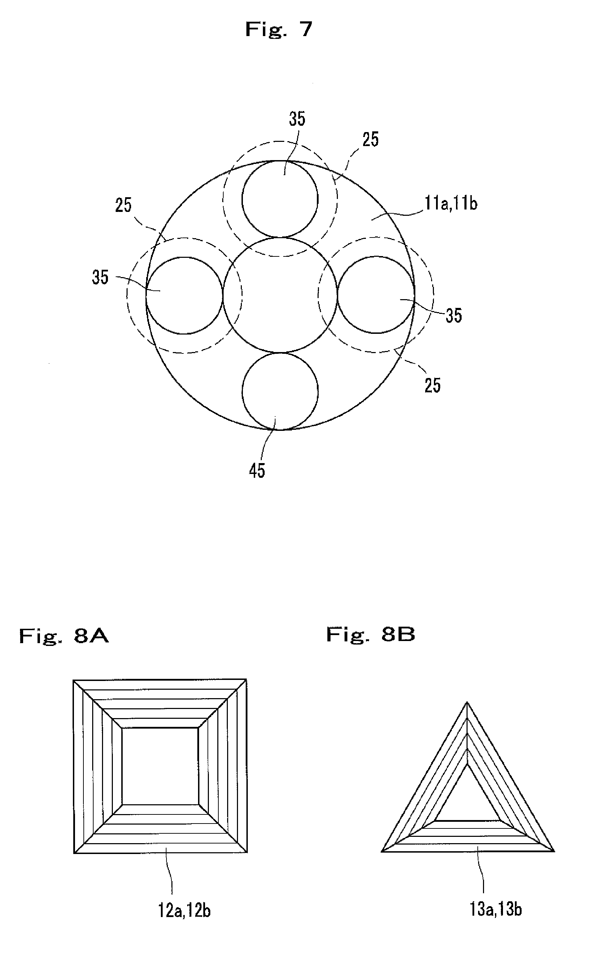

Fig. 7 is a top perspective view showing the structure of a reactor apparatus of the fifth embodiment.

In Fig. 7, each of three magnetic leg iron cores 35 having coils 25 wound thereaorund, respectively, and one zero-phase magnetic leg iron core 45 is configured to have a sheet of thin belt-shaped magnetic material rolled with insulation treatment to form a cylindrical shape.

Similarly to the magnetic leg iron core 31 shown in the first embodiment, it is preferable to provide a slit (corresponding to 3a in Fig. 1) in each of the magnetic leg iron cores 35 in the longitudinal direction thereof. In addition, although it is not illustrated, the three magnetic leg iron cores 35 are respectively provided with one or more gap adjusting means (corresponding to 5a, 5b in Fig. 3), and connect the two yoke iron cores 11a and 11b to each other along with the one zero-phase magnetic leg iron core 45.

In the above configuration shown in Fig. 7, the difference from Fig. 2 that shows the first embodiment is that only one zero-phase magnetic leg iron core 45 is used. By using only one zero-phase magnetic leg iron core 45, the area occupied by the zero-phase magnetic leg iron core 45 can be reduced, then it may cause an effect in reducing the size as a reactor apparatus.

In addition, as those other than the change of the number of zero-phase magnetic leg iron cores 45 in the fifth embodiment are substantially the same as Fig. 2 that shows the first embodiment, duplicated description will be omitted.

### Sixth Embodiment

Next, a sixth embodiment of the present invention will be described. Note that Figs. 8A and 8B are diagrams showing examples of the shape of a yoke iron core of the present invention, where Fig. 8A is a diagram showing the shape of a yoke iron core of the reactor apparatus of the sixth embodiment, and Fig. 8B is a diagram showing the shape of a yoke iron core of the reactor apparatus of the seventh embodiment.

Fig. 8A is a diagram showing the shape of yoke iron cores 12a, 12b of the reactor apparatus of the sixth embodiment.

In Fig. 8A, the yoke iron cores 12a, 12b have a hollow rectangular shape as viewed from the top. In the first embodiment to the fifth embodiment, exemplary yoke iron cores 11a, 11b (Fig. 1, Fig. 2, Figs. 4 to 7) having a hollow toroidal shape have been shown, however, they may have a hollow rectangular shape shown in Fig. 8A.

By having the hollow rectangular shape of the yoke iron cores 12a, 12b shown in Fig. 8A above, the flexibility of a shape as a reactor apparatus increases, and it may cause an effect in reducing in size as a reactor apparatus or reducing footprint depending on the installation location.

### Seventh Embodiment

Next, a seventh embodiment of the present invention will be described.

Fig. 8B is a diagram showing the shape of yoke iron cores 13a, 13b of the reactor apparatus of the seventh embodiment.

In Fig. 8B, the yoke iron cores 13a, 13b have a hollow triangle (equilateral triangle) shape as viewed from the top.

In the first embodiment to the fifth embodiment, exemplary yoke iron cores 11a, 11b (Fig. 1, Fig. 2, Figs. 4 to 7) having a hollow toroidal shape have been shown, and in the sixth embodiment, exemplary yoke iron cores 12a, 12b (Fig. 8A) having a hollow rectangular shape have been shown, however, they may have a hollow triangle shape shown in Fig. 8B.

By having the hollow triangle shape of the yoke iron cores 13a, 13b shown in Fig. 8B above, the flexibility of a shape as a reactor apparatus increases, and it may cause an effect in reducing in size as a reactor apparatus, or reducing footprint depending on the installation location.

### Eighth Embodiment

Next, an eighth embodiment of the present invention will be described.

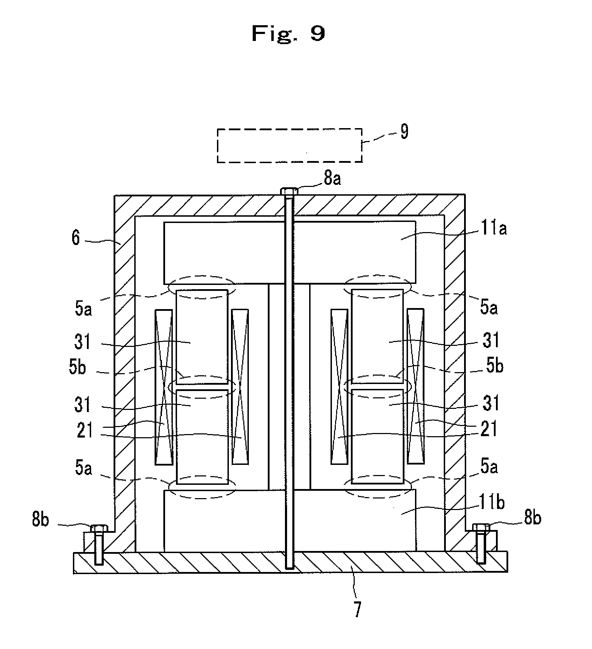

Fig. 9 is a vertical cross-sectional view showing a fixing method for the reactor apparatus as the eighth embodiment.

The reactor apparatus (11a, 11b, 21, 31) is mounted on a base 7, covered with a fixing jig 6 from the top, and crimped and fixed by fixing means 8a, 8b.

The base 7 and the fixing jig 6 may be formed of a sheet-like member that entirely covers the reactor apparatus, or may be formed of a frame-like member that does not entirely cover the reactor apparatus.

Also, a cooling means 9 may be arranged on the concentric axis of the yoke iron cores 11a, 11b, as appropriate.

The above fixing method and arrangement of the cooling means 9 will help the embodiment to become practical.

Note that in Fig. 9, with respect to the reactor apparatus (11a, 11b, 21, 31), although the reactor apparatus of the first embodiment in Fig. 3 is exemplarily shown, the similar fixing method and arrangement of the cooling means 9 (Fig. 9) are applicable to the reactor apparatus of the second embodiment to the fifth embodiment (Figs. 4 to 7) also.

### Ninth Embodiment

Next, as a ninth embodiment of the present invention, a power converter using a reactor apparatus will be described.

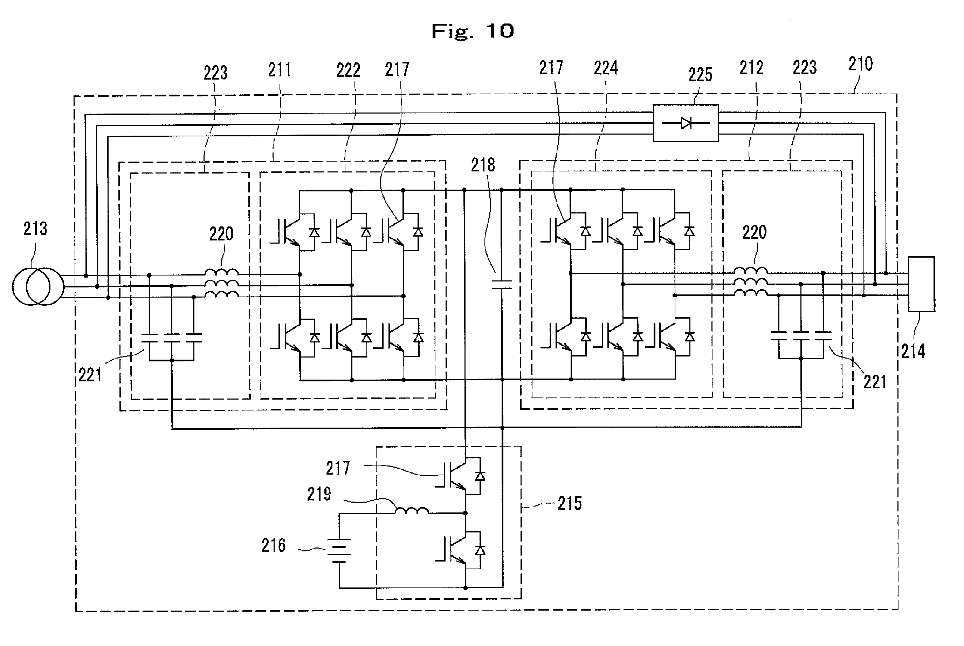

Fig. 10 shows a configuration of a power converter 210 of the ninth embodiment of the present invention, and is a circuit diagram in which either one of the reactor apparatus shown in the first embodiment to the eighth embodiment is applied to the power converter 210. The circuit diagram shown in Fig. 10 shows a circuit configuration of a power converter as a three-phase uninterruptible power supply apparatus of an online type uninterruptable power supply.

In Fig. 10, the power converter 210 is arranged between an AC power supply 213 and a load 214.

The power converter 210 includes a rectifying circuit 211 for converting AC power of the AC power supply 213 to DC power, and an inverter circuit 212 for converting the DC power to AC power having a given voltage and a given frequency. Also, between an output terminal of the rectifying circuit 211 and an input terminal of the inverter circuit 212, a capacitor 218 for smoothing and a chopper circuit 215 are connected.

The rectifying circuit 211 is configured to include a filter circuit 223 including reactors 220 for three phases and capacitors 221 for three phases, and a bridge circuit (AC/DC converter) 222 in which a plurality of switching elements 217 made of IGBT (Insulated Gate Bipolar Transistor), one of semiconductor elements, are bridge-connected.

The inverter circuit 212 is configured to include a DC/AC conversion circuit 224 in which the plurality of switching elements 217 made of IGBT are bridge-connected, and the filter circuit 223 including the reactors 220 for three phases and the capacitors 221 for three phases.

Note that the plurality of switching elements 217 made of IGBT in the bridge circuit 222 and the DC/AC conversion circuit 224 are respectively controlled with PWM (Pulse Width Modulation) control, integrally through gate terminals, to perform the respective designated functions described above.

In addition, diodes for protecting against excess voltage are added to or are parasitic in the respective switching elements 217 made of IGBT, in inverse-parallel connection.

Further, for the reactor apparatuses 220 for three phases included in the filter circuits 223 provided in the rectifying circuit 211 and the inverter circuit 212, the reactor apparatuses of any one of the first embodiment to the eighth embodiment are used.

Furthermore, the chopper circuit 215 having the two switching elements 217 made of IGBT in series connection is connected between both terminals of the capacitor 218. One end of a coil or a reactor 219 is connected to the connecting point between the two switching elements 217, and a battery 216 is connected between the other end of the reactor 219 and an emitter of one of the switching elements 217.

In the power converter 210 described above, during normal operation, AC power from the AC power supply 213 is converted to DC power by the rectifying circuit 211, then the DC power is converted back to AC power of a given voltage and a given frequency suitable to the load 214 by the inverter circuit 212, to be supplied to the load 214.

In addition, as an operation ouside the normal operation (operation 1 outside the normal operation), when power supply from the AC power supply 213 is stopped, the battery 216 and the inverter circuit 212 are connected to each other by the action of the chopper circuit 215, and the load 214 is continuously supplied with power converted to AC power by the inverter circuit 212, originated from the battery 216.

Further, as an operation during maintenance or the like (operation 2 outside the normal operation), a bypass circuit 225 is connected and AC power is supplied to the load 214 from the AC power supply 213 through the bypass circuit 225 , without passing through the rectifying circuit 211 and the inverter circuit 212. Note that the features to be provided by the bypass circuit 225 depends on the specification of the power converter 210.

As described above, the rectifying circuit 211 is an AC/DC conversion circuit that converts three-phase AC power to DC power, and the inverter circuit 212 is a DC/AC conversion circuit that converts DC power to three-phase AC power of a given voltage and a given frequency.

In these convensions, both of the rectifying circuit 211 and the inverter circuit 212 operate the plurality of switching elements that are PWM-controlled. In the process of these switching operations, harmonic current components (ripple components) are generated.

The filter circuits 223 are used for removing these generated harmonic current components and matching of impedance between the AC power supply 213 and the bridge circuit 222, and between the load 214 and the bridge circuit 222.

The filter circuit 223 is configured to use the reactors 220 for three phases and the capacitors 221 for three phases.

As the reactors 220 for three phases, the reactor apparatus of any one of the first embodiment to the eighth embodiment of the present invention described above is used.

By using the reactor apparatus according to the present embodiments for three phases, a power converter that has the electric properties of excellent symmetry among three phases and high conversion efficiency, and are reduced in size and weight can be realized and provided.

### Other Embodiments

The present invention is not limited to the embodiments described above. Examples will be described hereinafter.

Although the magnetic leg iron cores 31 to 35 shown in the first to fifth embodiments described above are examples having a cylindrical shape, a rectangular parallelepiped shape and a sector shape formed by laminating the thin belt-shaped magnetic material, the reactor apparatus may be configured by any combination of the magnetic leg iron cores in these shapes.

In addition, an isotropic magnetic material such as ferrite, compressed powder material or the like may be used as the material of the iron core, and iron cores using them and iron cores using the thin belt-shaped magnetic material may be combined.

Further, with respect to the yoke iron cores 11a to 13a, 11b to 13b, the examples in the hollow toroidal shape, or in the rectangular shape and the triangle shape as Fig. 8 have been shown, however, the shape is not limited thereto, and may be any hollow polygonal column shape. Also, it may be any substantially plate-like shape without a hollow.

Furthermore, in the first to fifth embodiments, the number of the magnetic leg iron cores 31 to 35 has been three as shown in Fig. 1, Fig. 2 for example, however it may be multiples of three. Or, when it is not limited to three phases, it may be any given number.

Still furthermore, in the first to fourth embodiments, three magnetic leg iron cores 31 to 34 are disposed on the circumference of the yoke iron cores 11a, 11b at an angle of approximately 120° relative to the concentric axis of the yoke iron cores 11a and 11b in a circular shape having a hollow space, however it is not necessarily limited to approximately 120°. As shown in Fig. 7 that shows the fifth embodiment, there is also a case the angle is different from approximately 120°. Also, when it is not limited to three phases, there exists a mutual angle between the plural magnetic leg iron cores suitable to the number of phases.

Moreover, in Fig. 5 which shows the third embodiment, as a method of forming the three magnetic leg iron cores 33 and the three zero-phase magnetic leg iron cores 43 having a substantially section shape, it has been described to "cut an iron core in the radial direction at a suitable angle, where the iron core is formed by rolling thin belt-shaped magnetic material in a toroidal shape with insulation treatment", however, as far as the substantially section shape shown in Fig. 5 can be obtained, other methods may be employed.

The bridge circuit 222 in the power converter 210 shown in Fig. 10 has been configured by bridge-connecting and PWM-controlling the IGBTs that are semiconductor switching elements 217 to provide, jointly with the capacitor 218 and the filter circuit 223, a function of the rectifying circuit or the AC/DC converter that converts three-phase AC power to DC power, however, the configuration of the bridge circuit 222 as a part of the rectifying circuit that converts three-phase AC power to DC power is not limited only to the IGBT.

It may be also configured with a MOSFET (Metal-Oxide-Semiconductor Field-Effect Transistor), a bipolar transistor (Bipolar junction transistor), or a BiCMOS (Bipolar Complementary Metal Oxide Semiconductor), which are semiconductor switching elements. Also, it may be configured by bridge-connecting diodes that are semiconductor elements.

As an application of the reactor apparatus according to the embodiment of the present invention, an example of the uninterruptible power supply has been shown in Fig. 10, however, the application is not limited thereto. By using the reactor apparatus of the present invention in a filter circuit of a power converter for other usages that use a bridge circuit, a compact and highly efficient power converter can be provided.

### Supplement to the present invention and present embodiments

As described above, according to the present invention and the present embodiments, a reactor apparatus which has excellent housing attributes, improves symmetry between multiphase coils, and are excellent in operational stability and low loss property compared with a reactor apparatus that uses conventional three-phase five-leg type iron cores, and a power converter using the same can be provided.

### Legend for Reference Numerals

- 3a: Slit
- 5a, 5b: Gap adjusting means
- 6: Fixing jig
- 7: Base
- 8a, 8b: Fixing means
- 9: Cooling means
- 10: Reactor apparatus
- 11a, 11b, 12a, 12b, 13a, 13b: Yoke iron core
- 21, 22, 23, 24: Coil
- 31, 32, 33, 34, 35: Magnetic leg iron core
- 41, 42, 43, 44, 45: Zero-phase magnetic leg iron core
- 211: Rectifying circuit
- 212: Inverter circuit
- 213: AC power supply
- 214: Load
- 215: Chopper circuit
- 216: Battery
- 217: Switching element, IGBT
- 218, 221: Capacitor
- 219, 220: Reactor
- 222: Bridge circuit, AC/DC converter
- 223: Filter circuit
- 224: DC/AC conversion circuit
- 225: Bypass circuit
- 330a, 330b, 330c: Coil
- 331: Two-legged iron core
- 331a, 331b, 331c: Magnetic leg section
- 331d, 331e: Zero-phase magnetic leg section

## Claims

1. A reactor apparatus comprising:
two yoke iron cores disposed opposite each other;
a plurality of magnetic leg iron cores each of which has a coil wound therearound and is provided with a gap adjusting means; and
one or more zero-phase magnetic leg iron cores around which a coil is not wound,
wherein the two yoke iron cores disposed opposite each other are connected to each other with the plurality of magnetic leg iron cores and the one or more zero-phase magnetic leg iron cores.

2. The reactor apparatus according to claim 1, wherein
the plurality of magnetic leg iron cores are three magnetic leg iron cores.

3. The reactor apparatus according to claim 1, wherein
the plurality of magnetic leg iron cores are disposed on the circumference at a predetermined angle relative to a concentric axis of the yoke iron cores.

4. The reactor apparatus according to claim 3, wherein
the predetermined angle is approximately 120°.

5. The reactor apparatus according to claim 1, wherein
the yoke iron cores are formed by rolling thin belt-shaped magnetic material in a toroidal shape.

6. The reactor apparatus according to claim 3, wherein
the yoke iron cores are formed by rolling thin belt-shaped magnetic material in a toroidal shape.

7. The reactor apparatus according to claim 1, wherein
each of the plurality of magnetic leg iron cores is formed by rolling thin belt-shaped magnetic material in a cylindrical shape, and provided with at least one slit in the longitudinal direction of the cylindrical shape.

8. The reactor apparatus according to claim 3, wherein
each of the plurality of magnetic leg iron cores is formed by rolling thin belt-shaped magnetic material in a cylindrical shape, and provided with at least one slit in the longitudinal direction of the cylindrical shape.

9. The reactor apparatus according to claim 5, wherein
each of the plurality of magnetic leg iron cores is formed by rolling thin belt-shaped magnetic material in a cylindrical shape, and provided with at least one slit in the longitudinal direction of the cylindrical shape.

10. The reactor apparatus according to claim 6, wherein
each of the plurality of magnetic leg iron cores is formed by rolling thin belt-shaped magnetic material in a cylindrical shape, and provided with at least one slit in the longitudinal direction of the cylindrical shape.

11. The reactor apparatus according to claim 1, wherein
each of the plurality of magnetic leg iron cores has a rectangular parallelepiped shape in which a plurality of sheets of thin belt-shaped magnetic material are laminated.

12. The reactor apparatus according to claim 3, wherein
each of the plurality of magnetic leg iron cores has a rectangular parallelepiped shape in which a plurality of sheets of thin belt-shaped magnetic material are laminated.

13. The reactor apparatus according to claim 5, wherein
each of the plurality of magnetic leg iron cores has a rectangular parallelepiped shape in which a plurality of sheets of thin belt-shaped magnetic material are laminated.

14. The reactor apparatus according to claim 6, wherein
each of the plurality of magnetic leg iron cores has a rectangular parallelepiped shape in which a plurality of sheets of thin belt-shaped magnetic material are laminated.

15. The reactor apparatus according to claim 1, wherein
each of the plurality of magnetic leg iron cores has a section shape with a predetermined apex angle, and is obtained by rolling thin belt-shaped magnetic material in a toroidal shape then cutting the outcome in the radial direction.

16. The reactor apparatus according to claim 3, wherein
each of the plurality of magnetic leg iron cores has a section shape with a predetermined apex angle, and is obtained by rolling thin belt-shaped magnetic material in a toroidal shape then cutting the outcome in the radial direction.

17. The reactor apparatus according to claim 5, wherein
each of the plurality of magnetic leg iron cores has a section shape with a predermined apex angle, and is obtained by rolling thin belt-shaped magnetic material in a toroidal shape then cutting the outcome in the radial direction.

18. The reactor apparatus according to claim 6, wherein
each of the plurality of magnetic leg iron cores has a section shape with a predetermined apex angle, and is obtained by rolling thin belt-shaped magnetic material in a toroidal shape and then cutting the outcome in the radial direction.

19. The reactor apparatus according to any one of claims 1 to 18, wherein
the laminating direction of thin belt-shaped magnetic material that forms the plurality of magnetic leg iron cores is substantially the same as the laminating direction of thin belt-shaped magnetic material that forms the yoke iron cores.

20. The reactor apparatus according to any one of claims 1 to 18, wherein
the yoke iron cores are crimped and fixed from the top and bottom by a fixing jig, and a cooling means is provided on the concentric axis of the yoke iron cores.

21. The reactor apparatus according to any one of claims 1 to 18, wherein
the coil is formed of a linear conductor or a plate-like conductor provided with insulation material.

22. The reactor apparatus according to any one of claims 1 to 4, wherein
the yoke iron cores and the magnetic leg iron cores are formed of isotropic material having soft magnetic properties such as ferrite and a compressed powder conductor.

23. A power converter using the reactor apparatus according to any one of claims 1 to 18.

24. The power converter according to claim 23, comprising:
a bridge circuit configured with semiconductor elements; and
a filter circuit comprising the reactor apparatus and a capacitor,
wherein the filter circuit has a function of removing a harmonic current component generated from the bridge circuit.
